# EUROPÄISCHE PATENTSCHRIFT

(11) **EP 2 821 200 B1**
(45) Veröffentlichungstag und Bekanntmachung des Hinweises auf die Patenterteilung: **10.04.2024**
(21) Anmeldenummer: 14175682.5
(22) Anmeldetag: 03.07.2014
(51) Int. Cl.: B29C 35/02, B29B 11/16, B29C 70/38

(54) **Faservorformling-Temperiervorrichtung**
Fibre preform tempering device
Dispositif de régulation de préformes en fibres

(30) Priorität: 05.07.2013 DE 102013107105
(43) Veröffentlichungstag der Anmeldung: 07.01.2015
(73) Patentinhaber: Deutsches Zentrum für Luft- und Raumfahrt e.V., 51147 Köln (DE)
(72) Erfinder: Grohmann, Yannis, 20249 Hamburg (DE); Zacharias, Fabian, 01328 Dresden (DE)
(74) Vertreter: Aisch, Sebastian

(56) Entgegenhaltungen:
- EP-A2- 0 312 993
- WO-A1-02/30657
- DE-A1-102008 048 384
- DE-A1-102011 054 287
- US-A- 6 146 576
- US-A1- 2012 288 583

## Beschreibung

Die Erfindung betrifft ein Verfahren zum lokalen Temperieren eines Faservorformlings sowie eine Faservorformling-Temperiervorrichtung hierzu.

Bauteile aus einem Faserverbundwerkstoff, sogenannte Faserverbundbauteile, sind aus der Luft- und Raumfahrt heute nicht mehr wegzudenken. Aber auch im Automobilbereich findet die Verwendung derartiger Werkstoffe immer mehr Zuspruch. Insbesondere kritische Strukturelemente werden aufgrund der hohen gewichtsspezifischen Festigkeit und Steifigkeit bei minimalem Gewicht aus faserverstärkten Kunststoffen gefertigt. Durch die aus der Faserorientierung resultierende anisotrope Eigenschaft der Faserverbundwerkstoffe können Bauteile exakt an lokale Belastungen angepasst werden und ermöglichen so eine optimale Materialausnutzung im Sinne des Leichtbaus.

Im Fertigungsprozess kommen dabei in den trockenen Faserhalbzeugen wie Gelege und Gewebe auch sogenannte Prepregs (mit einem Matrixmaterial vorimprägnierte Faserhalbzeuge) zum Einsatz. Durch die immer höheren Stückzahlen bei der Produktion von faserverstärkten Bauteilen bestehen große Bestrebungen, den Herstellungsprozess weitestgehend zu automatisieren, ohne dabei die Qualität des Herstellungsprozesses bzw. der herzustellenden Bauteile negativ zu beeinflussen.

Damit die spätere Bauteilform entsteht, werden häufig Faserhalbzeuge während des sogenannten Preformens unter Aufbringung einer äußeren Kraft in ein Formwerkzeug drapiert, deren Werkzeugoberfläche eine der späteren Bauteilformen entsprechend der Geometrie aufweist. Um zu verhindern, dass während des Preformens, insbesondere während eines automatisierten Ablegeprozesses bzw. Drapierprozesses, die einzelnen Faserhalbzeuge sich gegeneinander verschieben, werden die Faserhalbzeuge häufig fixiert, was beispielsweise durch ein thermisch aktivierbares Bindermaterial in Form eines Pulvers oder eines Vlieses durch Einbringung von Wärmeenergie erfolgen kann. Bei den sogenannten Prepregs kann auch ohne Bindermaterial durch Einbringung von Wärme ein Anheften erreicht werden, da das in den vorimprägnierten Fasern enthaltene Matrixmaterial aufweicht oder aufschmilzt und so aneinander klebt.

Insbesondere bei großen Bauteilen und bei Bauteilen mit einem großen Lagenaufbau ist das Fixieren notwendig, um einzelne Lagen miteinander zu verbinden und die hergestellte Preform, auch Faservorformling genannt, ein gewisses Maß an Eigensteifigkeit zu verleihen.

Aus der DE 10 2011 076 463 A1 ist ein Reparaturverfahren für ein Formteil aus einem Kunststoffmaterial bekannt, bei dem ein passives Heizelement in dem Reparaturbereich vorgesehen ist, das berührungslos von außen mit einem magnetischen Wechselfeld beaufschlagt wird.

Aus der DE 103 53 070 A1 ist ein Verfahren und eine Vorrichtung zur Binderaktivierung von Faserhalbzeugen bekannt, bei dem in dem Formwerkzeug zwei Elektroden vorgesehen sind, die mit den insbesondere äußeren Randbereichen der Preform in Berührung stehen. Wird nun eine Spannung an die Elektroden angelegt, so erfolgt ein Stromfluss durch die gesamte Preform, was zu einer Erwärmung und somit zu einer Binderaktivierung führt. Nachteilig hierbei ist jedoch, dass die gesamte Preform erwärmt werden soll, was insbesondere bei einer Preform mit großem Lagenaufbau zu hohen Stromflüssen führt. Denn durch die Anordnung der Elektroden im Formwerkzeug erfolgt in der Regel der Stromfluss durch die unteren Faserhalbzeuglagen, so dass eine Binderaktivierung in höheren Faserhalbzeuglagen nur durch eine hohe Wärmeabstrahlung der unteren Lagen und somit durch einen hohen Stromfluss erreicht werden kann.

Aus der DE 10 2011 108 157 A1 ist ein Formwerkzeug zur Herstellung von Faserverbundbauteilen bekannt, bei dem in dem Formwerkzeug eine Mehrzahl von Induktionsvorrichtungen vorgesehen sind, um so in das Formwerkzeug eingebrachte Faserverbundbauteile mittels Induktion zu erwärmen.

Eine ähnliche Vorrichtung ist auch aus der DE 10 2006 040 049 A1 bekannt, bei dem unter einem Vakuumsack die Faserhalbzeuglagen auf dem Formwerkzeug angeordnet sind. Durch eine Druckdifferenz werden die Kohlenstofffasern aneinander angedrückt, wobei mit Hilfe eines magnetischen Wechselfeldes elektrische Ströme in den Kohlenstofffasern zur Binderaktivierung erzeugt werden.

Aus der DE 10 2008 020 564 A1 ist eine Tapelegevorrichtung bekannt, bei der die Anpressrolle so ausgebildet ist, dass mit Hilfe von Infrarotstrahlung oder Induktion die abgelegten Fasertapes mit Wärmeenergie beaufschlagt werden können.

Aus der WO 02/030657 A1 ist die Herstellung sogenannter Composite-Plates bekannt, die aus einem Gewebe und einem thermoplastischen Kunststoff hergestellt werden. Das Gewebe wird durch mehrere Walzpaare geführt, wobei diejenigen Walzen der Walzpaare, die die gleiche Seite des Gewebebandes kontaktieren, mit einer elektrischen Energiequelle verbunden sind. Durch Anlegen einer elektrischen Spannung kann nun ein Stromfluss in dem Gewebeband zwischen den beiden Walzpaaren bewirkt werden, so dass sich das Gewebe erwärmt und ein thermoplastischer Kunststoff aufgeschmolzen bzw. kontaktiert werden kann.

Aus der US 6,146,576 ist ein Verfahren und eine Vorrichtung zur Herstellung eines Faserverbundbauteils bekannt, wobei das Faserverbundbauteil eine elektrisch leitfähige Faserlage aufweist, die als Heizelement vorgesehen ist und mit einer elektrischen Energiequelle verbunden wird.

Aus der DE 10 2011 054 287 A1 ist eine Vorrichtung zur Herstellung eines Kunststoffformteils bekannt, wobei das zunächst flache Formteil an seinen Enden mithilfe von Elektroden kontaktiert wird. Anschließend wird das Formteil bestromt, um es zu erwärmen und in eine entsprechende Form zu zwängen.

Aus der US 2012/0288583 A1 ist ebenfalls eine Vorrichtung bekannt, mit der Faserverbundbauteile hergestellt werden können. Gezeigt ist hierbei eine geschlossene Werkzeugform, wobei im Inneren der Werkzeugform elektrische Kontakte vorgesehen sind, die mit den eingebrachten Faserhalbzeugen kontaktieren.

Aus der EP 0 312 993 A2 ist ein Verfahren zum Imprägnieren von Fasermaterial mit einem Matrixmaterial bekannt, wobei mithilfe einer Imprägnierrolle das Matrixmaterial aufgebracht werden soll, wobei die Imprägnierrolle eine reliefartige Oberfläche aufweist.

Aus der DE 10 2008 048 384 A1 ist schließlich ein Verfahren zum Verformen von Gegenständen, insbesondere aus einem thermoplastischem Kunststoff, bekannt, wobei an beabstandeten Positionen eine Elektrode auf dem Kunststoff angesetzt wird, um so den Bereich dazwischen durch Bestromen zu erwärmen.

Bei der Einbringung von Wärmeenergie besteht meist das Problem, dass derartige Anlagen zum einen sehr komplex und energie- und zeitaufwendig sind, und zum anderen aufgrund der Reibung im Material Faserondulationen entstehen können, die Fehlstellungen der Bauteile hervorrufen, die in vielen Anwendungsbereichen nicht erlaubt sind. Darüber hinaus besteht das Problem, dass bei der Erwärmung des gesamten Bauteils zum Zwecke der Binderaktivierung meist ein hoher Energieeintrag notwendig ist, um das in dem Faservorformling enthaltene thermisch aktivierbare Bindermaterial thermisch zu aktivieren.

Es ist daher Aufgabe der vorliegenden Erfindung ein verbessertes Verfahren und eine verbesserte Vorrichtung zum Temperieren von Faservorformlingen anzugeben, mit dem insbesondere lokal begrenzt eine Fixierung durch die Temperierung erreicht werden kann, um so beispielsweise den Herstellungsschritt des Preformens schneller und effizienter zu gestalten, ohne dabei die Qualität des späteren Bauteils negativ zu beeinflussen.

Die Aufgabe wird mit den Verfahrensmerkmalen des Patentanspruches 1 sowie mit den Vorrichtungsmerkmalen des Patentanspruches 10 erfindungsgemäß gelöst.

Demnach wird erfindungsgemäß ein Verfahren zum lokalen Temperieren eines Faservorformlings vorgeschlagen, bei dem zunächst mindestens eine elektrische Elektrode auf einer äußeren Seite des Faservorformlings positioniert und kontaktiert wird. Weiterhin wird eine elektrische Gegenelektrode auf derselben äußeren Seite des Faservorformlings beabstandet zu der Elektrode positioniert und kontaktiert.

Durch die kontaktierte Elektrode und Gegenelektrode wird nun eine Anpresskraft in Richtung des Faservorformlings aufgebracht, um die Fasern des Faservorformlings im Bereich der kontaktierten Elektrode und Gegenelektrode zu kompaktieren. Durch das Kompaktieren der Fasern im Bereich der kontaktierten Elektrode und Gegenelektrode wird zum einen der Widerstand im Grenzbereich zwischen der Elektrode/Gegenelektrode und Faservorformling verringert sowie der elektrische Widerstand innerhalb des Faservorformlings im Bereich der Elektrode/Gegenelektrode, so dass hierdurch der Stromfluss durch den Faservorformling gezielt gesteuert werden kann.

Anschließend wird an die kontaktierte Elektrode und/oder Gegenelektrode eine elektrische Spannung mit Hilfe einer elektrischen Energiequelle, beispielsweise eine elektrische Spannungsquelle, angelegt, um den Stromfluss innerhalb des Faservorformlings zwischen der kontaktierten Elektrode und Gegenelektrode zu bewirken.

Hierdurch entsteht der Vorteil, dass in dem Faservorformling lokal begrenzt entsprechende Bereiche des Faservorformlings temperiert werden können, um so beispielsweise ein Bindermaterial zu aktivieren oder ein Matrixmaterial aufzuschmelzen, ohne dass hierfür der gesamte Faservorformling erwärmt werden muss. Vielmehr lässt sich an vordefinierten Bereichen des Faservorformlings eine lokale Temperierung bewirken, welche dann zu dem gewünschten Anheften der Fasern innerhalb des Faservorformlings führt. Durch das Aufbringen der Anpresskraft und somit der Kompaktierung der Fasern im Bereich der Elektrode/Gegenelektrode wird eine Verringerung des elektrischen Widerstandes innerhalb des Faservorformlings sowie im Übergang zwischen Elektrode und Fasermaterial hervorgerufen, so dass gezielt ein Stromfluss zur lokalen Temperierung erzeugt werden kann.

Der Faservorformling ist hierbei aus elektrisch leitfähigen Faserhalbzeugen bzw. Fasern gebildet oder beinhaltet in Teilbereichen elektrisch leitfähiges Material, beispielsweise durch Übereinanderlegen flächiger Faserhalbzeuge in einer Werkzeugform. Unter einem Faservorformling bzw. einer Preform wird ein Fasergebilde verstanden, das aus einem Fasermaterial oder aus mehreren Faserhalbzeugen gebildet ist. Die Geometrie des Faservorformlings kann dabei bereits die Endform des herzustellenden Faserverbundbauteils enthalten oder eine Vorstufe davon sein. So kann ein Faservorformling aus einer Mehrzahl von Faserhalbzeugen durch Drapieren von Faserhalbzeugen in ein Formwerkzeug entstehen und die Grundlage für die weiteren Herstellungsschritte bis zum fertigen Faserverbundbauteil bilden.

Unter dem Fixieren der Fasern bzw. Faserhalbzeuge in den Faservorformling wird dabei insbesondere verstanden, dass aneinander anliegende Fasern oder Faserhalbzeuge miteinander stoffschlüssig verbunden werden, beispielsweise durch Aktivierung eines Bindermaterials oder durch Aufheizen von bereits vorimprägnierten Matrixmaterialien oder anderen Kunststoffverbindungen. Durch das Fixieren der Fasern oder Faserhalbzeugen soll ein Anheften der Fasern oder Faserhalbzeuge gegeneinander so erfolgen, dass ein Verschieben der Fasern oder Faserhalbzeugen im weiteren Herstellungsprozess, insbesondere während des Einbringens des Faservorformlings in eine Injektions- oder Aushärtungsvorrichtung und während des Aushärtens verhindert werden kann.

Unter dem lokalen Temperieren des Faservorformlings wird verstanden, dass Teilbereiche des Faservorformlings temperiert werden, das heißt erwärmt oder aufgeheizt werden.

Ein großer Vorteil der vorliegenden Erfindung besteht dabei darin, dass eine lokale Temperierung eines Faservorformlings aufgrund der vorgegebenen Prozessparameter (beispielsweise elektrische Spannung, Anpresskraft) prozesssicher reproduzierbar ist, so dass insbesondere bei der Serienproduktion die Temperierung prozesssicher durchgeführt werden kann.

Bei einem aus mehreren Faserhalbzeuglagen aufgebauten Faservorformlingen besteht darüber hinaus der große Vorteil, dass mit der vorliegenden Erfindung gezielt bestimmte Faserhalbzeuglagen lokal temperiert werden können, um so beispielsweise innen liegende Faserhalbzeuglagen zu temperieren.

In einer vorteilhaften Ausführungsform wird die äußere Seite des Faservorformlings mit einer ringförmigen Elektrode kontaktiert, wobei in dem von der ringförmigen Elektrode umschlossenen Bereich die Gegenelektrode zur Kontaktierung auf der äußeren Seite beabstandet zu der ringförmigen Elektrode positioniert wird.

In einer weiteren vorteilhaften Ausführungsform wird die äußere Seite des Faservorformlings mit einer stabförmigen Elektrode oder mit einer punktförmigen Elektrode kontaktiert. Die stabförmige Elektrode hat dabei den Vorteil, dass ungeachtet der Kenntnis des tatsächlichen Faserverlaufes prozesssicher ein Stromfluss erzeugt werden kann. Darüber hinaus lassen sich gegenüber einer punktförmigen Elektrode auch größere Bereiche des Faservorformlings lokal temperieren.

Darüber hinaus ist es denkbar, dass die kontaktierte Elektrode und/oder Gegenelektrode während des Kontaktierens und während der angelegten elektrischen Spannung auf der äußeren Seite des Faservorformlings bewegt bzw. verfahren wird, wodurch auch größere Bereiche entsprechend temperiert werden können.

In einer weiteren vorteilhaften Ausführungsform wird die Elektrode und die Gegenelektrode in Abhängigkeit von einer Faserorientierung einer lokal zu temperierenden Faserhalbzeuglage des aus mehreren Faserhalbzeuglagen gebildeten Faservorformlings derart mit der äußeren Seite des Faservorformlings kontaktiert, dass ein Stromfluss in der lokal zu temperierenden Faserhalbzeuglage bewirkt wird. Unter Kenntnis der Faserorientierung der lokal zu temperierenden Faserhalbzeuglage eines mehrlagig aufgebauten Faservorformlings kann gezielt ein Stromfluss zwischen der Elektrode und der Gegenelektrode in Faserrichtung bewirkt werden, da der Widerstand in Faserrichtung deutlich geringer ist als quer dazu, so dass die lokale Temperierung unter Ausnutzung des jeweiligen Faserverlaufes mittels des Stromflusses durchgeführt wird. Hierdurch lassen sich gezielt innen liegende Faserhalbzeuglagen des Faservorformlings lokal temperieren, wobei es hierbei vorteilhaft ist, die Anpresskraft der Elektrode/Gegenelektrode in Abhängigkeit der Tiefe der Faserhalbzeuglage einzustellen.

Vorteilhafterweise wird der Stromfluss, beispielsweise durch Einstellung einer entsprechenden elektrischen Spannung oder durch Einstellung einer entsprechenden Anpresskraft derart erzeugt, dass zum Anheften oder Konsolidieren von Fasern oder Faserhalbzeugen des Faservorformlings durch die lokale Temperierung ein thermisch aktivierbares Bindermaterial aktiviert oder ein vorimprägniertes Matrixmaterial erwärmt wird. Hierdurch lassen sich verschiedene Fasern oder Faserlagen aneinander anheften, so dass ein Verschieben oder Verrutschen und somit eine ungewollte Veränderung der Geometrie des Faservorformlings verhindert wird. In einem späteren Herstellungsschritt wird dann das Faserverbundbauteil vollständig ausgehärtet.

Des Weiteren ist es vorteilhaft, wenn eine Relativbewegung zwischen dem Faservorformling und der Elektrode/Gegenelektrode während der Kontaktierung mit der Elektrode/Gegenelektrode an der äußeren Seite und während der Anlegung der Spannung erzeugt wird. Daher ist es erfindungsgemäß vorgesehen, dass die Elektrode und/oder Gegenelektrode gegenüber dem Faservorformling bewegt wird oder dass der Faservorformling gegenüber der Elektrode/Gegenelektrode bewegt wird. So ist es beispielsweise denkbar, dass eine Kontaktwalze vorgesehen ist, an der die mindestens eine Elektrode und/oder Gegenelektrode angeordnet ist, wobei durch Antrieb der Kontaktwalze der Faservorformling gegenüber der Elektrode und/oder Gegenelektrode bewegt wird. Hierdurch lässt sich ebenfalls ein entsprechender Stromfluss in den Faservorformling bewirken.

Hierbei ist es nun ganz besonders vorteilhaft, wenn mittels einer Leistungsregeleinheit die elektrische Leistung des in dem Faserhalbzeug bewirkten Stromflusses in Abhängigkeit von einer Geschwindigkeit der Relativbewegung zwischen Faservorformling und Elektrode/ Gegenelektrode geregelt wird. So kann beispielsweise die elektrische Leistung bei geringer Geschwindigkeit niedriger sein und mit zunehmender Geschwindigkeit erhöht werden, so dass beispielsweise in der Anfangsphase der Relativbewegung mit zunehmender Geschwindigkeit auch die Leistung erhöht wird, so dass es insbesondere zu Beginn der Bewegung zu keinem zu hohen Energieeintrag in den Faservorformling kommt, was zu Beschädigungen des Faservorformlings führen kann. Vielmehr wird die elektrische Leistung so geregelt, dass sie sich der Geschwindigkeit der Relativgeschwindigkeit anpasst.

Des Weiteren ist es denkbar, dass an einer Kontaktwalze mehrere Elektroden und/oder mehrere Gegenelektroden, jeweils isoliert voneinander, angeordnet sind, wodurch sich ein entsprechender Stromfluss gezielt in den Faservorformling bewirken lässt. So ist es auch denkbar, dass mehrere Kontaktwalzen beabstandet voneinander angeordnet sind, die jeweils mindestens eine Elektrode und/oder Gegenelektrode aufweisen, wodurch sich ein entsprechend gezielter Stromfluss innerhalb des Faservorformlings bewirken lässt. Die Elektroden und/oder Gegenelektroden können dabei radial abstehend an der Kontaktwalze angeordnet sein, so dass hierdurch die aufgebrachte Anpresskraft im Bereich der Elektroden und/oder Gegenelektroden erhöht wird, was eine verbesserte Kompaktierung zur Folge hat. Denkbar ist auch, dass die Elektroden und/oder Gegenelektroden radial am Umfang der Walze nach einem Muster verteilt sind, so dass bei der Drehbewegung der Walze ein entsprechendes Kontaktierungsmuster über die Zeit bewirkt wird. Hierbei können auch Elektrode und Gegenelektrode abwechselnd angeordnet sein.

Es ist des Weiteren vorteilhaft, wenn mittels einer Steuereinheit das Anlegen der Spannung so gesteuert wird, dass sich beispielsweise ein konstanter Stromfluss bewirken lässt oder ein sich in diskreten Zeitabständen unterbrochener Stromfluss bewirken lässt. Hierbei ist es denkbar, dass das Anlegen der Spannung mit Hilfe der Steuereinheit so gesteuert wird, dass ein vorgegebener Energieeintrag pro Fläche und/oder Länge des Faservorformlings bewirkt wird.

Denkbar ist es auch, dass die Steuereinheit zum separaten Ansteuern einer Mehrzahl von Elektroden und/oder Gegenelektroden ausgebildet ist, um beispielsweise einzelne Elektroden und/oder Gegenelektroden zu- und abschalten zu können. Auch lassen sich einzelne Elektroden dann zu einer Elektrode zusammenfassen.

Des Weiteren ist es ganz besonders vorteilhaft, wenn bei einer Mehrzahl von elektrischen Elektroden und/oder Gegenelektroden mittels einer elektronischen Steuereinheit nacheinander jeweils an mindestens einer der Elektroden (vorzugsweise nur an jeweils einer Elektrode zur gleichen Zeit) eine elektrische Spannung angelegt und die übrigen Elektroden und/oder der Gegenelektroden derart geschaltet werden, dass ein Stromfluss zwischen der jeweiligen Elektrode und einer vorgegebenen Gegenelektrode bewirkt wird. So wird nacheinander an jeder Elektrode eine Spannung angelegt, um einen Stromfluss zu bewirken, wobei die entsprechenden übrigen Elektroden und Gegenelektroden so geschaltet werden, dass ein Stromfluss genau zwischen der Elektrode, an der die Spannung angelegt wurde, und einer definierten Gegenelektrode bewirkt wird. Hierdurch wird der Vorteil erreicht, dass insbesondere bei großflächigen Faserhalbzeugen eine ausreichende und großflächige Temperierung erreicht werden kann.

Die Aufgabe wird im Übrigen erfindungsgemäß auch mit einer Faservorformling-Temperiervorrichtung zum lokalen Temperieren eines Faservorformlings gemäß dem Anspruch 10 gelöst, wobei die Elektrode und die Gegenelektrode mit einer elektrischen Energiequelle verbunden und an einer Positioniereinrichtung derart angeordnet sind, dass die Elektrode und die Gegenelektrode auf ein und derselben Seite des Faservorformlings positioniert und kontaktiert werden können. Die Positioniereinrichtung ist dabei derart ausgebildet, dass sie durch die Elektrode und Gegenelektrode eine Anpresskraft in Richtung des Faservorformlings aufbringen kann.

Vorteilhafte Ausgestaltungen der Faservorformling-Temperiervorrichtung befinden sich in den entsprechenden Unteransprüchen.

Unter dem Positionieren im Sinne der vorliegenden Erfindung wird verstanden, dass die Elektrode und Gegenelektrode an einer bestimmten Position den Faservorformling kontaktiert, sei es, dass die Elektrode und/oder Gegenelektrode bewegt wird, oder sei es, dass der Faservorformling bewegt wird.

Die Erfindung wird anhand der beigefügten Zeichnungen beispielhaft näher erläutert. Es zeigen:
- Figur 1: - Schematische Darstellung einer lokalen Temperierung eines Faservorform lings;
- Figur 2: - Schematische Darstellung eines Ausführungsbeispiels mit länglicher Kontaktelektrode.

Die nachstehend ausgeführten Erläuterungen sind Ausführungsbeispiele der vorliegenden Erfindung. Gleiche Bezugsziffern meinen gleiche Merkmale in den Figuren.

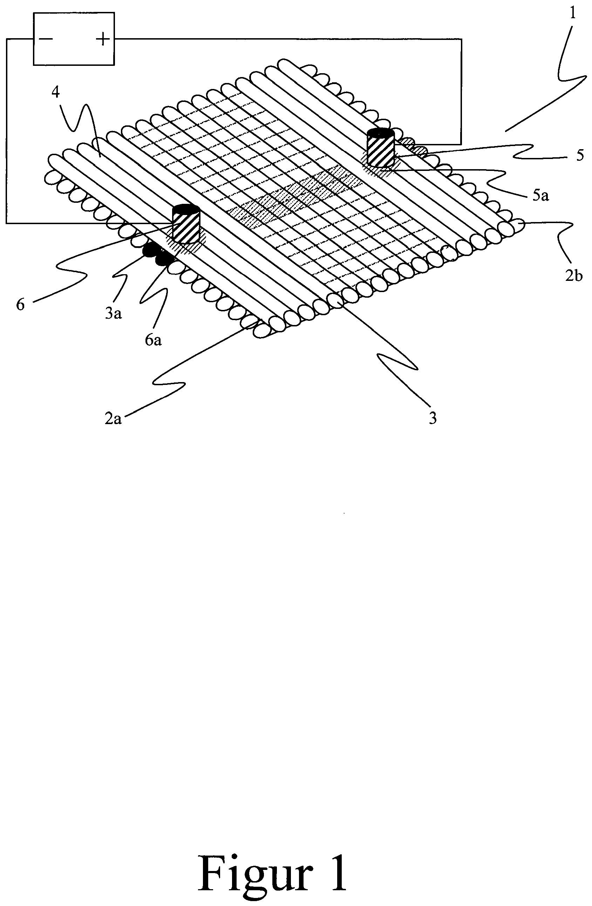

Figur 1 zeigt schematisch einen Faservorformling 1 der aus mehreren Faserlagen 2 gebildet ist. In Figur 1 sind nur zwei Faserlagen 2 dargestellt, wobei der Faservorformling 1 auch mehr als zwei Faserlagen 2 aufweisen kann.

Die einzelnen Faserlagen 2 sind jeweils aus einer Mehrzahl von Fasern 3 bzw. Rovings gebildet, wobei mehrere parallel angeordnete und in dieselbe Richtung orientierte Fasern bzw. Rovings 3 eine Faserlage 2 bilden.

Auf ein und derselben äußeren Seite 4 des Faservorformlings 1 wird nun eine Elektrode 5 und eine dazu beabstandete Gegenelektrode 6 positioniert und mit der oberen Faserlage, welche die äußere Seite 4 des Faservorformlings 1 bildet, elektrisch kontaktiert.

Die elektrische Kontaktierung der Elektrode 5 erfolgt dabei in einem Bereich 5a des Faservorformlings, während der elektrische Kontakt der Gegenelektrode 6 in einem elektrischen Kontaktbereich 6a erfolgt.

Die Elektrode 5 und die Gegenelektrode 6 können an einer nicht dargestellten Positioniereinrichtung (beispielsweise Roboter) angeordnet sein, welche das Positionieren und Kontaktieren der Elektrode 5/Gegenelektrode 6 in der beabstandeten Art und Weise auf die äußere Seite 4 des Faservorformlings 1 wirkt. Des Weiteren sind die Elektrode 5 und die Gegenelektrode 6 mit einer elektrischen Energiequelle verbunden, um eine Spannung an die Elektrode/Gegenelektrode anlegen zu können.

Wie in Figur 1 dargestellt, sind die Elektrode 5 und die Gegenelektrode 6 auf der äußeren Seite 4 des Faservorformlings 1 so positioniert und kontaktiert, dass sie nicht im Faserverlauf der Fasern 3 der oberen Faserlage 2a liegen. Dies erschwert einen Stromfluss zwischen den beiden Elektroden auf der oberen Faserlage.

Durch Aufbringen einer Anpresskraft F in Richtung des Faservorformlings 1 durch die Elektrode/Gegenelektrode werden die Fasern im Bereich 5a der Elektrode 5 und im Bereich 6a der Gegenelektrode 6 kompaktiert, so dass der elektrische Widerstand sowohl zwischen Elektrode/Gegenelektrode und Faservorformling als auch zwischen den einzelnen Faserlagen 2 verringert wird. In einer unteren Faserlage 2b sind die beiden Elektroden jedoch in dem Faserverlauf angeordnet, so dass aufgrund des verringerten elektrischen Widerstandes in den Kontaktbereichen 5a, 6a der Stromfluss durch die erste Faserlage 2a in die zweite Faserlage 2b und dann entlang des Faserverlaufes in Richtung der Gegenelektrode erzeugt wird. Es wird somit ein Stromfluss lokal in den betroffenen Fasern 3a der unteren Faserlage 2b erzeugt, so dass aufgrund des elektrischen Widerstandes hier lokal eine Temperierung dieser Fasern 3a bewirkt wird. Hierdurch kann beispielsweise eine Aktivierung eines thermisch aktivierbaren Bindermaterials erreicht werden oder das Aufschmelzen bereits vorimprägnierter Matrixmaterialien. Hierdurch kann vorteilhafterweise ein Anheften in den Bereichen erreicht werden, die von der lokalen Temperierung betroffen sind. Somit lässt sich die obere Faserlage 2a und die untere Faserlage 2b aneinanderheften, ohne den gesamten Faservorformling temperieren zu müssen.

In dem Ausführungsbeispiel der Figur 1 ist die Elektrode 5 und die Gegenelektrode 6 als punktförmige Elektrode ausgebildet. Denkbar sind hier auch andere Formen der Elektroden, beispielsweise eine ringförmige Elektrode.

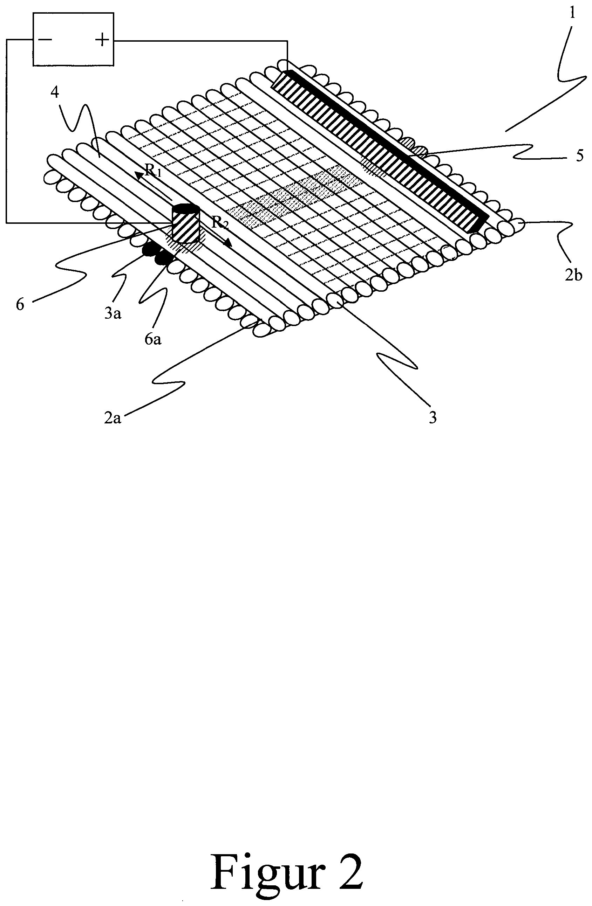

Figur 2 zeigt schematisch eine weitere Ausführungsform, bei der die Elektrode 5 als eine stabförmige Elektrode ausgebildet ist. Hierdurch lässt sich ein wesentlicher Bereich des Faservorformlings abdecken, was insbesondere dann vorteilhaft ist, wenn die Faserorientierung nicht hundertprozentig bekannt ist. Auch lässt sich hierdurch der Stromfluss wesentlich flexibler gestalten.

Im Ausführungsbeispiel der Figur 2 ist mit den Richtungspfeilen R₁ und R₂ eine Bewegungsrichtung der Gegenelektrode 6 angezeigt, in die die Gegenelektrode während der Kontaktierung und Aufbringung der Anpresskraft sowie während der Anlegung der elektrischen Spannung bewegt wird. Hierdurch lassen sich mit einer relativ kleinen Punktelektrode und einer korrespondierenden stabförmigen Elektrode auch größere Bereiche lokal temperieren. Hierbei ist es vorteilhaft, wenn die Gegenelektrode 6, welche in die Richtungen R₁ und R₂ bewegt werden soll, als Gleit-, Rollen- oder Kugelelektrode ausgebildet ist. So kann während des Aufbringens der für die Kompaktierung der betroffenen Fasern notwendigen Anpresskraft die Gegenelektrode 6 in die beispielhaft dargestellten Richtungen R₁ und R₂ bewegt werden, während eine entsprechende Spannung für den Stromfluss angelegt ist. Selbstverständlich kann die Gegenelektrode 6 in jede Richtung auf der äußeren Seite 4 des Faservorformlings 1 bewegt werden.

### Bezugszeichenliste

- 1: - Faservorformling
- 2: - Faserlagen
- 2a: - obere Faserlage
- 2b: - untere Faserlage
- 3: - Fasern // Rovings
- 3a: - temperierte Fasern // Rovings
- 4: - äußere Seite des Faservorformlings
- 5: - Elektrode
- 5a: - elektrischer Kontaktbereich der Elektrode 5
- 6: - Gegenelektrode
- 6a: - elektrischer Kontaktbereich der Gegenelektrode 6

## Patentansprüche

1. Verfahren zum lokalen Temperieren eines Faservorformlings (1), mit den Schritten:
a) Kontaktieren mindestens einer elektrischen Elektrode (5) auf einer äußeren Seite (4) des Faservorformlings (1),
b) Kontaktieren mindestens einer elektrischen Gegenelektrode (6) beabstandet zu der mindestens einen Elektrode (5) auf derselben äußeren Seite (4) des Faservorformlings (1),
c) Aufbringen einer Anpresskraft (F) in Richtung des Faservorformlings (1) zum Kompaktieren der Fasern (3) des Faservorformlings (1) im Bereich (5a, 6a) der kontaktierten Elektrode (5) und Gegenelektrode (6) und
d) Anlegen einer elektrischen Spannung an die kontaktierte Elektrode (5) und/oder Gegenelektrode (6) mittels einer elektrischen Energiequelle zum Erzeugen eines Stromflusses in dem Faservorformling (1) zwischen der kontaktierten Elektrode (5) und Gegenelektrode (6),
**dadurch gekennzeichnet, dass**
die mindestens eine Elektrode und/oder Gegenelektrode (6) während der Kontaktierung mit der äußeren Seite (4) des Faservorformlings (1) und während der Anlegung der Spannung über die äußere Seite (4) des Faservorformlings (1) bewegt wird und/oder dass der Faservorformling (1) während der Kontaktierung mit der Elektrode und/oder Gegenelektrode an der äußeren Seite (4) und während der Anlegung der Spannung bewegt wird.

2. Verfahren nach Anspruch 1, **dadurch gekennzeichnet, dass** die Anpresskraft (F) in Richtung des Faservorformlings (1) durch die mindestens eine Elektrode (5) und/oder die mindestens eine Gegenelektrode (6) aufgebracht wird.

3. Verfahren nach Anspruch 1 oder 2, **dadurch gekennzeichnet, dass** die äußere Seite (4) des Faservorformlings (1) mit mindestens einer ringförmigen Elektrode kontaktiert wird und die Gegenelektrode in einem von der ringförmigen Elektrode umschlossenen Bereich zur Kontaktierung auf der äußeren Seite (4) beabstandet zu der ringförmigen Elektrode positioniert wird.

4. Verfahren nach Anspruch 1 oder 2, **dadurch gekennzeichnet, dass** die äußere Seite (4) des Faservorformlings mit mindestens einer stabförmigen Elektrode oder mit mindestens einer punktförmigen Elektrode kontaktiert wird.

5. Verfahren nach einem der vorhergehenden Ansprüche, **dadurch gekennzeichnet, dass** die äußere Seite des Faservorformlings (1) mit mindestens einer punktförmigen Gegenelektrode kontaktiert wird.

6. Verfahren nach einem der vorhergehenden Ansprüche, **dadurch gekennzeichnet, dass** die äußere Seite des Faservorformlings (1) mit mindestens einer Kontaktwalze, welche die mindestens eine Elektrode und/oder Gegenelektrode aufweist, kontaktiert wird.

7. Verfahren nach einem der vorhergehenden Ansprüche, **dadurch gekennzeichnet, dass** die mindestens eine Elektrode (5) und die Gegenelektrode (6) in Abhängigkeit von einer Faserorientierung einer lokal zu temperierenden Faserlage (2) des aus mehreren Faserlagen (2) gebildeten Faservorformlings (1) derart mit der äußeren Seite (4) des Faservorformlings (1) kontaktiert wird, dass ein Stromfluss in der lokal zu temperierenden Faserlage (2a) bewirkt wird.

8. Verfahren nach einem der vorhergehenden Ansprüche, **dadurch gekennzeichnet, dass** der Stromfluss derart erzeugt wird, dass zum Anheften oder Konsolidieren von Fasern oder Faserlagen des Faservorformlings durch die lokale Temperierung ein thermisch aktivierbares Bindermaterial aktiviert oder ein vorimprägniertes Matrixmaterial erwärmt wird.

9. Verfahren nach einem der vorhergehenden Ansprüche, **dadurch gekennzeichnet, dass** bei einer Mehrzahl von elektrischen Elektroden und/oder Gegenelektroden mittels einer Elektrodensteuereinheit nacheinander jeweils an mindestens einer der Elektroden eine elektrische Spannung angelegt und die übrigen Elektroden und/oder Gegenelektroden derart geschaltet werden, dass ein Stromfluss zwischen der jeweiligen Elektrode und einer vorgegebenen Gegenelektrode bewirkt wird.

10. Faservorformling-Temperiervorrichtung zum lokalen Temperieren eines Faservorformlings, mit
• mindestens einer Elektrode und mindestens einer Gegenelektrode, die zum elektrischen Kontaktieren einer äußeren Seite des Faservorformlings ausgebildet sind,
• einer elektrischen Energiequelle zum Anlegen einer elektrischen Spannung an die mindestens eine Elektrode und/oder Gegenelektrode, und
• eine Positioniereinrichtung, die zum Positionieren der mindestens einen Elektrode und Gegenelektrode auf derselben äußeren Seite des Faservorformlings zum elektrischen Kontaktieren der Elektrode und Gegenelektrode mit der äußeren Seite des Faservorformlings und zum Aufbringen einer Anpresskraft in Richtung des Faservorformlings zum Kompaktieren der Fasern des Faservorformlings im Bereich der kontaktierten Elektrode und Gegenelektrode derart ausgebildet ist, dass ein Stromfluss in dem Faservorformling (1) zwischen der kontaktierten Elektrode (5) und Gegenelektrode (6) bewirkt wird,
**dadurch gekennzeichnet, dass**
die Positioniereinrichtung zum Bewegen der kontaktierten Elektrode und/oder Gegenelektrode während des Anlegens der elektrischen Spannung an die kontaktierte Elektrode und/oder Gegenelektrode und/oder dass die Positioniereinrichtung zum Bewegen des Faservorformlings während des Anlegens der elektrischen Spannung an die kontaktierte Elektrode und/oder Gegenelektrode ausgebildet ist.

11. Faservorformling-Temperiervorrichtung nach Anspruch 10, **dadurch gekennzeichnet, dass** die Elektrode als ringförmige Elektrode ausgebildet ist, wobei die Positioniereinrichtung zum beabstandeten Positionieren der Gegenelektrode in einem von der ringförmigen Elektrode umschlossenen Bereich der äußeren Seite zur Kontaktierung ausgebildet ist.

12. Faservorformling-Temperiervorrichtung nach Anspruch 10 oder 11, **dadurch gekennzeichnet, dass** die Elektrode als stabförmige Elektrode oder als punktförmige Elektrode und/oder dass die Gegenelektrode als punktförmige Gegenelektrode ausgebildet ist.

13. Faservorformling-Temperiervorrichtung nach einem der Ansprüche 10 bis 12, **dadurch gekennzeichnet, dass** die Vorrichtung mindestens eine Kontaktwalze aufweist, an der die mindestens eine Elektrode und/oder Gegenelektrode angeordnet ist.

14. Faservorformling-Temperiervorrichtung nach einem der Ansprüche 10 bis 13, **dadurch gekennzeichnet, dass** die Faservorformling-Temperiervorrichtung eine Mehrzahl von elektrischen Elektroden und/oder Gegenelektroden hat, wobei eine Elektrodensteuereinheit vorgesehen ist, die eingerichtet ist, nacheinander jeweils an mindestens einer der Elektroden (6) eine elektrische Spannung anzulegen und die übrigen Elektroden und/oder Gegenelektroden derart zu schalten, dass ein Stromfluss zwischen der jeweiligen Elektrode und einer vorgegebenen Gegenelektrode bewirkt wird.

## Claims

1. Method for local tempering of a fiber preform (1), comprising the steps
a) Contacting at least one electrical electrode (5) on an outer side (4) of the fiber preform (1)
b) Contacting at least one electrical counter electrode (6) at a distance from the at least one electrode (5) on the same outer side (4) of the fiber preform (1),
c) Applying a contact pressure (F) in the direction of the fiber preform (1) to compact the fibers (3) of the fiber preform (1) in the region (5a, 6a) of the contacted electrode (5) and counter electrode (6), and
d) Applying an electrical voltage to the contacted electrode (5) and/or counter electrode (6) by means of an electrical energy source to generate a current flow in the fiber preform (1) between the contacted electrode (5) and counter electrode (6),
**characterized in that**
the at least one electrode and/or counter electrode (6) is moved over the outer side (4) of the fiber preform (1) during contact with the outer side (4) of the fiber preform (1) and during the application of the voltage and/or that the fiber preform (1) is moved during contact with the electrode and/or counter electrode on the outer side (4) and during the application of the voltage.

2. Method according to claim 1, **characterized in that** the contact pressure (F) is applied in the direction of the fiber preform (1) by the at least one electrode (5) and/or the at least one counter electrode (6).

3. Method according to claim 1 or 2, **characterized in that** the outer side (4) of the fiber preform (1) is contacted with at least one annular electrode and the counter electrode is positioned in an area enclosed by the annular electrode for contacting on the outer side (4) at a distance from the annular electrode.

4. Method according to claim 1 or 2, **characterized in that** the outer side (4) of the fiber preform is contacted with at least one rod-shaped electrode or with at least one point-shaped electrode

5. Method according to one of the preceding claims, **characterized in that** the outer side of the fiber preform (1) is contacted with at least one point-shaped counter electrode.

6. Method according to one of the preceding claims, **characterized in that** the outer side of the fiber preform (1) is contacted with at least one contact roller which has the at least one electrode and/or counter electrode.

7. Method according to one of the preceding claims, **characterized in that** the at least one electrode (5) and the counter electrode (6) are contacted with the outer side (4) of the fiber preform (1), which is formed from a plurality of fiber layers (2), as a function of a fiber orientation of a fiber layer (2) to be tempered locally, in such a way that a current flow is effected in the fiber layer (2a) to be tempered locally.

8. Method according to one of the preceding claims, **characterized in that** the current flow is generated in such a way that a thermally activatable binder material is activated or a pre-impregnated matrix material is heated by the local temperature control for bonding or consolidating fibers or fiber layers of the fiber preform.

9. Method according to one of the preceding claims, **characterized in that**, in the case of a plurality of electrical electrodes and/or counter electrodes, an electrical voltage is applied successively to at least one of the electrodes by means of an electrode control unit and the remaining electrodes and/or counter electrodes are switched in such a way that a current flow is effected between the respective electrode and a predetermined counter electrode.

10. Fiber preform tempering device for local tempering of a fiber preform, with
• at least one electrode and at least one counter electrode, which are designed to make electrical contact with an outer side of the fiber preform,
• an electrical energy source for applying an electrical voltage to the at least one electrode and/or counter electrode, and
• a positioning device which is designed for positioning the at least one electrode and counter electrode on the same outer side of the fiber preform for electrically contacting the electrode and counter electrode with the outer side of the fiber preform and for applying a contact pressure in the direction of the fiber preform for compacting the fibers of the fiber preform in the region of the contacted electrode and counter electrode in such a way that a current flow is effected in the fiber preform (1) between the contacted electrode (5) and counter electrode (6),
**characterized in that**
the positioning device is designed to move the contacted electrode and/or counter electrode during the application of the electrical voltage to the contacted electrode and/or counter electrode and/or **in that** the positioning device is designed to move the fiber preform during the application of the electrical voltage to the contacted electrode and/or counter electrode.

11. Fiber preform tempering device according to claim 10, **characterized in that** the electrode is designed as an annular electrode, wherein the positioning device is designed for spaced positioning of the counter electrode in a region of the outer side enclosed by the annular electrode for contacting.

12. Fiber preform tempering device according to claim 10 or 11, **characterized in that** the electrode is designed as a rod-shaped electrode or as a point-shaped electrode and/or **in that** the counter electrode is designed as a point-shaped counter electrode.

13. Fiber preform tempering device according to one of claims 10 to 12, **characterized in that** the device has at least one contact roller on which the at least one electrode and/or counter electrode is arranged.

14. Fiber preform tempering device according to one of claims 10 to 13, **characterized in that** the fiber preform tempering device has a plurality of electrical electrodes and/or counter electrodes, an electrode control unit being provided which is set up to apply an electrical voltage to at least one of the electrodes (6) in succession and to switch the remaining electrodes and/or counter electrodes in such a way that a current flow is effected between the respective electrode and a predetermined counter electrode.

## Revendications

1. Procédé de thermorégulation locale d'une préforme de fibres (1), comprenant les étapes consistant à :
a) mettre en contact au moins une électrode électrique (5) sur une face extérieure (4) de la préforme de fibres (1),
b) mettre en contact au moins une contre-électrode électrique (6) à distance de ladite au moins une électrode (5) sur la même face extérieure (4) de la préforme de fibres (1),
c) appliquer une force de pression (F) en direction de la préforme de fibres (1) pour compacter les fibres (3) de la préforme de fibres (1) dans la zone (5a, 6a) de l'électrode (5) et de la contre-électrode (6) mises en contact, et
d) appliquer une tension électrique à l'électrode (5) et/ou à la contre-électrode (6) mises en contact, au moyen d'une source d'énergie électrique pour générer un flux de courant dans la préforme de fibres (1) entre l'électrode (5) et la contre-électrode (6) mises en contact,
**caractérisé en ce que**
ladite au moins une électrode et/ou contre-électrode (6) est déplacée sur la face extérieure (4) de la préforme de fibres (1) pendant la mise en contact avec la face extérieure (4) de la préforme de fibres (1) et pendant l'application de la tension, et/ou **en ce que** la préforme de fibres (1) est déplacée pendant la mise en contact avec l'électrode et/ou la contre-électrode sur la face extérieure (4) et pendant l'application de la tension.

2. Procédé selon la revendication 1,
**caractérisé en ce que** la force de pression (F) est appliquée en direction de la préforme de fibres (1) par ladite au moins une électrode (5) et/ou ladite au moins une contre-électrode (6).

3. Procédé selon la revendication 1 ou 2,
**caractérisé en ce que** la face extérieure (4) de la préforme de fibres (1) est mise en contact avec au moins une électrode annulaire, et la contre-électrode est positionnée à distance de l'électrode annulaire dans une zone entourée par l'électrode annulaire pour la mise en contact sur la face extérieure (4).

4. Procédé selon la revendication 1 ou 2,
**caractérisé en ce que** la face extérieure (4) de la préforme de fibres est mise en contact avec au moins une électrode en forme de tige ou avec au moins une électrode ponctuelle.

5. Procédé selon l'une des revendications précédentes,
**caractérisé en ce que** la face extérieure de la préforme de fibres (1) est mise en contact avec au moins une contre-électrode ponctuelle.

6. Procédé selon l'une des revendications précédentes,
**caractérisé en ce que** la face extérieure de la préforme de fibres (1) est mise en contact avec au moins un rouleau de contact comprenant ladite au moins une électrode et/ou contre-électrode.

7. Procédé selon l'une des revendications précédentes,
**caractérisé en ce que** ladite au moins une électrode (5) et la contre-électrode (6) sont mises en contact avec la face extérieure (4) de la préforme de fibres (1) en fonction d'une orientation des fibres d'une couche de fibres (2) à thermoréguler localement de la préforme de fibres (1) formée de plusieurs couches de fibres (2), de telle sorte qu'un flux de courant est provoqué dans la couche de fibres (2a) à thermoréguler localement.

8. Procédé selon l'une des revendications précédentes,
**caractérisé en ce que** le flux de courant est généré de telle sorte qu'un matériau liant, susceptible d'être activé thermiquement, est activé ou un matériau de matrice préimprégné est chauffé pour l'adhésion ou la consolidation de fibres ou de couches de fibres de la préforme de fibres grâce à la thermorégulation locale.

9. Procédé selon l'une des revendications précédentes,
**caractérisé en ce que**, dans le cas d'une pluralité d'électrodes et/ou de contre-électrodes électriques, une tension électrique est appliquée successivement à au moins l'une des électrodes au moyen d'une unité de commande d'électrodes, et les autres électrodes et/ou contre-électrodes sont commutées de manière à provoquer un flux de courant entre l'électrode respective et une contre-électrode prédéfinie.

10. Dispositif de thermorégulation d'une préforme de fibres pour la thermorégulation locale de la préforme de fibres, comprenant
• au moins une électrode et au moins une contre-électrode, qui sont conçues pour la mise en contact électrique avec une face extérieure de la préforme de fibres,
• une source d'énergie électrique pour appliquer une tension électrique à ladite au moins une électrode et/ou contre-électrode, et
• un moyen de positionnement qui est conçu pour positionner ladite au moins une électrode et contre-électrode sur la même face extérieure de la préforme de fibres pour mettre en contact électrique l'électrode et la contre-électrode avec la face extérieure de la préforme de fibres et pour appliquer une force de pression en direction de la préforme de fibres pour compacter les fibres de la préforme de fibres dans la zone de l'électrode et de la contre-électrode mises en contact de telle sorte qu'un flux de courant est provoqué dans la préforme de fibres (1) entre l'électrode (5) et la contre-électrode (6) mises en contact,
**caractérisé en ce que** le moyen de positionnement est conçu pour déplacer l'électrode et/ou la contre-électrode mises en contact pendant l'application de la tension électrique à l'électrode et/ou à la contre-électrode mises en contact, et/ou **en ce que** le moyen de positionnement est conçu pour déplacer la préforme de fibres pendant l'application de la tension électrique à l'électrode et/ou à la contre-électrode mises en contact.

11. Dispositif de thermorégulation de préformes de fibres selon la revendication 10,
**caractérisé en ce que** l'électrode est conçue comme une électrode annulaire, le moyen de positionnement étant conçu pour positionner la contre-électrode à distance dans une zone de la face extérieure entourée par l'électrode annulaire pour la mise en contact.

12. Dispositif de thermorégulation de préformes de fibres selon la revendication 10 ou 11,
**caractérisé en ce que** l'électrode est conçue comme une électrode en forme de tige ou comme une électrode ponctuelle, et/ou **en ce que** la contre-électrode est conçue comme une contre-électrode ponctuelle.

13. Dispositif de thermorégulation de préformes de fibres selon l'une des revendications 10 à 12,
**caractérisé en ce que** le dispositif comprend au moins un rouleau de contact sur lequel est disposée ladite au moins une électrode et/ou contre-électrode.

14. Dispositif de thermorégulation de préformes de fibres selon l'une des revendications 10 à 13,
**caractérisé en ce que** le dispositif de thermorégulation de préformes de fibres possède une pluralité d'électrodes et/ou de contre-électrodes électriques, une unité de commande d'électrodes étant prévue qui est conçue pour appliquer successivement une tension électrique à au moins une des électrodes (6) et pour commuter les autres électrodes et/ou contre-électrodes de telle sorte qu'un flux de courant est provoqué entre l'électrode respective et une contre-électrode prédéfinie.
